# FASCICULE DE BREVET EUROPEEN

(11) **EP 2 115 967 B1**
(45) Date de publication et mention de la délivrance du brevet: **01.08.2012**
(21) Numéro de dépôt: 07857830.9
(22) Date de dépôt: 19.12.2007
(51) Int. Cl.: H04L 12/56, H04M 3/42, H04L 29/06

(54) **PROCEDE D'ADAPTATION DU ROUTAGE DES COMMUNICATIONS D'UN CLIENT DANS UN RESEAU DE TYPE IMS**
VERFAHREN ZUR ANPASSUNG DES ROUTENS VON CLIENT-ÜBERMITTLUNGEN IN EINEM NETZWERK DES IMS-TYPS
METHOD FOR ADAPTING THE ROUTING OF CLIENT COMMUNICATIONS IN AN IMS-TYPE NETWORK

(30) Priorité: 22.12.2006 FR 0655886
(43) Date de publication de la demande: 11.11.2009
(73) Titulaire: Alcatel Lucent, 75007 Paris (FR)
(72) Inventeur: DURECU, Olivier, F-91460 Marcoussis (FR); LEGRAND, Patrick, F-91620 Nozay (FR)
(74) Mandataire: Sciaux, Edmond
(86) Numéro de dépôt international: PCT/EP2007/064208
(87) Numéro de publication internationale: WO 2008/080848

(56) Documents cités:
- EP-A- 1 551 144
- EP-A- 1 583 339
- US-A1- 2003 179 762
- US-A1- 2006 072 726
- US-A1- 2006 288 099

## Description

L'invention concerne un procédé d'adaptation du routage des communications d'un client dans un réseau de type IMS. L'invention concerne également un réseau de type IMS.

Le développement des télécommunications a permis qu'un nombre croissant de clients disposent d'un ou plusieurs terminaux, tels que des téléphones portables, des ordinateurs ou des assistants personnels numériques, pouvant communiquer via un ou plusieurs réseaux de communication de nature différente, c'est-à-dire utilisant des protocoles de communication distincts.

Pour permettre la communication entre des réseaux opérant sous différents protocoles, une architecture standardisée dite IMS (pour Internet Protocol Multimedia Subsystem) a été développée sous le standard 3GPP.

Un réseau IMS utilise un protocole dénommé IP (pour Internet Protocol) qui lui permet notamment de transmettre des informations sous la forme de paquets, chaque paquet comprenant un entête indiquant une adresse IP du destinataire des paquets de telle sorte que les paquets peuvent suivre différents chemins pour parvenir au destinataire. Le protocole IP permet au réseau IMS de recevoir ou de transmettre des informations de différents réseaux associés à ce réseau IMS et codées sous différents protocoles propres à chacun de ces réseaux.

Dans un réseau de type IMS, un client possède plusieurs identités correspondant à des profils stockés dans un équipement de stockage d'informations de type HSS (pour Home Subscriber Server), lesdits profils contenant les règles de routage des messages SIP (pour Session Initiation Protocol). Ces profils sont définis lors du premier enregistrement du client et sont administrés par l'opérateur du réseau IMS.

Dans certains cas, un client identifié peut souhaiter activer ponctuellement des règles de routage supplémentaires et les désactiver en fonction de ses besoins.

Par exemple, l'employeur du client peut lui fournir une connexion à son réseau PABX (pour Private Automatic Branch exchange en anglais), afin qu'il puisse utiliser des services de conversation professionnels à l'aide de son abonnement IMS personnel. Ainsi, le client peut décider d'avoir tous ses appels via le PABX lorsqu'il travaille (que ce soit sur place ou non) ou peut préférer désactiver cette fonction lorsqu'il est à son domicile.

Un autre exemple est la possibilité pour le client de mettre en place des règles évoluées de transfert d'appel. Typiquement lorsqu'il est à son domicile ou en vacances, le client peut activer des règles afin de rediriger tous ses appels professionnels entrants vers une messagerie vocale et recevoir tous les autres appels.

Selon l'art antérieur, pour permettre une adaptation de règles de routage, le client identifié est obligé de se connecter au réseau IMS sous une identité différente, ladite identité présentant les règles de routage souhaitées.

Par exemple, le client peut avoir une identité publique personnelle et une identité publique professionnelle qui présente les règles de routage professionnel. Le client doit donc se connecter avec l'une ou l'autre de ses identités pour bénéficier des règles de routage associées.

Par example, le document US 200 600 72 726 décrit un procédé qui permet au client de définir plusieurs profils ayant différentes règles des routage et de choisir quel profil utiliser en fonction de ses besoins.

Toutefois, si le client possède plusieurs identités publiques, il est difficile pour son interlocuteur potentiel de savoir sous quelle identité le client peut être contacté.

Par ailleurs, la solution prévoyant un changement d'identité selon l'art antérieur, n'est pas suffisamment adaptable ni ergonomique pour le client. En effet, le choix du client reste limité à son nombre d'identités alors qu'il peut souhaiter se connecter à de nouveaux services qui requièrent une modification de ses règles de routage.

Le document US 2003179762 décrit un procédé où le client peut choisir entre les règles de routage définies par l'opérateur de son réseau domestique ou par celui du réseau visité.

L'invention a pour but de pallier les problèmes de l'art antérieur en proposant un procédé d'adaptation dynamique du routage des communications d'un client dans un réseau de type IMS, ledit procédé ne requérant pas de changement d'identité du client.

A cet effet, et selon un premier aspect, l'invention propose un procédé d'adaptation du routage des communications d'un client dans un réseau de type IMS, ledit procédé prévoyant de permettre au client de transmettre des règles de routage supplémentaires, dans lequel lesdites règles de routage supplémentaires sont concaténées avec les règles de routage définies par l'opérateur du réseau IMS, les règles de routage concaténées étant utilisables ultérieurement par le réseau IMS pour adapter le routage des communications du client en fonction de ses besoins.

Selon un deuxième aspect, l'invention propose un réseau de type IMS comprenant une fonction S-CSCF qui, lors de la connexion d'un client audit réseau, communique avec un équipement de stockage d'informations HSS pour récupérer les règles de routage définies par l'opérateur pour ledit client, ledit réseau comprenant également des moyens permettant au client de transmettre des règles de routage supplémentaires, ladite fonction S-CSCF comprenant des moyens agencés pour concaténer lesdites règles de routage supplémentaires avec les règles de routage définies par l'opérateur, le réseau comprend en outre des moyens permettant au client d'activer, de désactiver et/ou de modifier au moins une règle de routage supplémentaire.

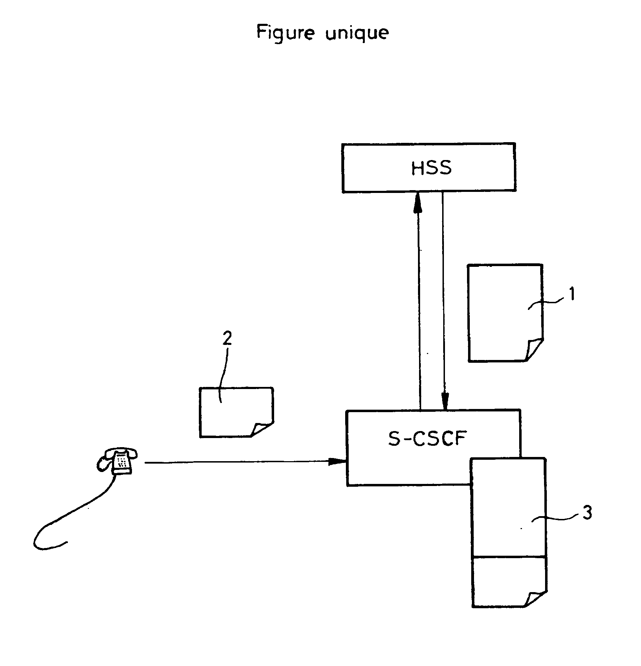

D'autres particularités et avantages de l'invention apparaîtront dans la description qui suit, faite en relation avec la figure jointe qui montre une partie de l'architecture générale d'un réseau IMS selon un mode de réalisation de l'invention.

L'invention concerne un procédé d'adaptation du routage des communications d'un client dans un réseau de type IMS qui permet au client C d'adapter de façon dynamique ses règles de routage. En particulier, le procédé permet au client d'adapter les règles de routage de ses communications sans avoir à changer d'identité publique dans le réseau IMS.

Lors de l'enregistrement d'un client C dans un réseau IMS, son profil est fourni à partir de critères IFC (pour Initial Filter Criteria en anglais) qui sont la formalisation des règles de routage selon les spécifications du standard 3GPP. Ces critères IFC sont établis par l'opérateur du réseau IMS de sorte à définir des règles de routage 1 pour le client C, lesdites règles étant récupérées par le réseau IMS lors de l'enregistrement du client C.

Le procédé selon l'invention prévoit de permettre au client C de transmettre des règles de routage supplémentaires 2. Ces règles de routage supplémentaires 2 peuvent être transmises par le client C lors de son enregistrement dans le réseau IMS, plus particulièrement en étant insérées dans le message SIP d'enregistrement du client C. En outre, les règles de routage supplémentaires 2 peuvent être transmises dans le format XML (pour eXtensible Markup Language en anglais) normalisé des critères IFC.

Par ailleurs, le procédé prévoit de concaténer les règles de routage supplémentaires 2 avec les règles de routage 1 définies par l'opérateur du réseau IMS, de sorte à pouvoir traiter ensemble lesdites règles de routage dans ledit réseau.

En particulier, les règles de routage 1 générées par les critères IFC sont récupérées par la fonction S-CSCF (pour Serving-Call Session Control Function) du réseau IMS, et la concaténation des règles de routage 1, 2 peut être réalisée au niveau de cette fonction.

Les règles de routage concaténées 3 ainsi obtenues sont utilisables ultérieurement par le réseau IMS pour le routage des communications du client en fonction de ses besoins. Par exemple, l'utilisation de ces règles 3 comprend l'activation d'au moins une règle de routage supplémentaire 2, la désactivation d'au moins une règle de routage supplémentaire 2 et/ou la modification d'au moins une règle de routage supplémentaire 2.

L'invention concerne également un réseau IMS tel que schématisé sur la figure qui comprend une fonction S-CSCF. Lors de la connexion d'un client C audit réseau, cette fonction communique avec un équipement de stockage d'informations HSS (pour Home Subscriber Serveur) pour récupérer les règles de routage 1 définies par l'opérateur pour ledit client.

Le réseau comprend également des moyens permettant au client de transmettre des règles de routage supplémentaires 2, la fonction S-CSCF comprenant des moyens agencés pour concaténer lesdites règles de routage supplémentaires 2 avec les règles de routage 1 définies par l'opérateur.

Le réseau IMS comprend en outre des moyens permettant au client C d'activer, de désactiver et/ou de modifier au moins une règle supplémentaire 2 en fonction de ses besoins.

On donne ci-dessous un exemple écrit en langage XML pour activer le routage des appels sortants vers le PABX professionnel :

```
 <InitiaIFiIterCriteria>
  <Priority>2</Priority>
  <TriggerPoint>
   <ConditionTypeCNF>1 </ConditionTypeCNF>
   <SPT>
    <Group>0</Group>
    <Method>INVITE</Method>
   </SPT>
  </TriggerPoint>
  <ApplicationServer>
   <ServerName>sip:PABX@alcatel.fr</ServerName>
    <DefauttHandling>0</DefauItHandling>
   </ApplicationServer>
  </InitialFilterCriteria>
```

La solution proposée par l'invention présente l'avantage d'être dynamique et de permettre au client C, avec une seule identité, d'adapter son profil IMS. Naturellement, cette adaptation est réalisée dans le respect des règles de routage 1 définies par l'opérateur, notamment en prévoyant que celles-ci aient une priorité supérieure à celle des règles de routage supplémentaires 2.

Par conséquent, le client C peut souscrire à des services et accéder à ceux-ci au moyen de son abonnement IMS sans qu'il soit obligé d'avoir recours à son opérateur pour qu'il modifie son profil de connexion.

## Revendications

1. Procédé d'adaptation du routage des communications d'un client (C) dans un réseau de type IMS, ledit procédé prévoyant de permettre au client (C) de transmettre des règles de routage supplémentaires (2), dans lequel lesdites règles de routage supplémentaires (2) sont transmises par le client lors de son enregistrement dans le réseau IMS, lesdites règles de routage supplémentaires sont concaténées avec des règles de routage (1) qui sont définies par l'opérateur du réseau IMS et qui sont récupérées depuis un équipement de stockage d'informations (HSS) stockant un profil du client (C) contenant lesdites règles de routage (1), le profil du client étant adapté lors de l'enregistrement du client par la concaténation des règles de routage (1) avec les règles de routage supplémentaires (2) qui sont aptes à être traitées ensemble à partir dudit profil du client, les règles de routage concaténées (3) étant utilisables ultérieurement par le réseau IMS pour le routage des communications du client en fonction de ses besoins, l'utilisation ultérieure des règles de routage concaténées (3) comprenant l'activation d'au moins une règle de routage supplémentaire (2), la désactivation d'au moins une règle de routage supplémentaire (2) et/ou la modification d'au moins une règle de routage supplémentaire (2) par le client.

2. Procédé d'adaptation selon la revendication 1, dans lequel la concaténation des règles de routage (1, 2) est réalisée au niveau de la fonction S-CSCF du réseau IMS.

3. Procédé d'adaptation selon la revendication 1 ou 2, dans lequel les règles de routage supplémentaires (2) sont insérées dans le message SIP d'enregistrement du client (C).

4. Procédé d'adaptation selon l'une quelconque des revendications 1 à 3, dans lequel les règles de routage supplémentaires (2) sont transmises en format XML.

5. Réseau de type IMS comprenant une fonction S-CSCF qui, lors de la connexion d'un client (C) audit réseau, communique avec un équipement de stockage d'informations (HSS) pour récupérer les règles de routage (1) définies par l'opérateur pour ledit client, ledit réseau comprenant également des moyens permettant au client de transmettre des règles de routage supplémentaires (2) lors de son enregistrement dans le réseau IMS, ladite fonction S-CSCF comprenant des moyens agencés pour concaténer lesdites règles de routage supplémentaires avec des règles de routage (1) qui sont définies par l'opérateur et qui sont récupérées depuis un équipement de stockage d'informations (HSS) stockant un profil du client (C) contenant lesdites règles de routage (1), le profil du client étant adapté lors de l'enregistrement du client par la concaténation des règles de routage (1) avec les règles de routage supplémentaires (2) qui sont aptes à être traitées ensemble à partir dudit profil du client, le réseau comprenant en outre des moyens permettant au client (C) d'activer, de désactiver et/ou de modifier au moins une règle de routage supplémentaire (2).

## Claims

1. A method for adapting communication routing from a client (C) within an IMS network, said method being capable of enabling the client (C) to transmit additional routing rules (2), in which said additional routing rules (2) are transmitted by the client when saved within the IMS network, said additional routing rules are concatenated with the routing rules (1) defined by the IMS network operator and retrieved from an information storage device (HSS) storing a client profile (C) containing said routing rules (1), the client profile being adapted when saved by the client by concatenation of the routing rules (1) with the additional routing rules (2) that are capable of being processed together from said client profile, the concatenated routing rules (3) being later usable by the IMS network for routing the client's messages depending upon his or her needs, the later use of the concatenated routing rules (3) comprising the enabling of at least one additional routing rule (2), the disabling of at least one additional routing rule (2), and/or the modification of at least one additional routing rule (2) by the client.

2. A method for adaptation according to claim 1 wherein the concatenation of routing rules (1, 2) is carried out in the S-CSCF function in the IMS network.

3. A method for adaptation according to claim 1 or 2, wherein the additional routing rules (2) are inserted into the SIP message saved by the client (C).

4. A method for adaptation according to any of the claims 1 to 3, wherein the additional routing rules (2) are transmitted in XML format.

5. An IMS network comprising an S-CSCF function that, when a client (C) signs onto said network, communicates with an information storage device (HSS) to retrieve the routing rules (1) defined by the operator for said client, said network also comprising means enabling the client to transmit additional routing rules (2) when saving them within the IMS network, said S-CSCF function comprising means configured to concatenate said additional routing rules with the routing rules (1) defined by the operator and retrieved from an information storage device (HSS) storing a client profile (C) containing said routing rules (1), the client profile being adapted when saved by the client by concatenating the routing rules (1) with the additional routing rules (2) that are capable of being processed together from said client profile, the network also comprising means making it possible for the client (C) to enable, disable, and/or modify at least one additional routing rule (2).

## Patentansprüche

1. Verfahren zur Anpassung des Routens von Verbindungen eines Kunden (C) in einem Netzwerk vom Typ IMS, wobei das besagte Verfahren vorsieht, den Kunden (C) zu befähigen, zusätzliche Routing-RegeIn (2) zu übertragen, wobei die besagten zusätzlichen Routing-Regeln (2) von dem Kunden bei dessen Registrierung im IMS-Netzwerk übertragen werden, wobei die besagten zusätzlichen Routing-Regeln mit Routing-Regeln (1), die vom Betreiber des IMS-Netzwerks definiert und aus einer Informationsspeichervorrichtung (HSS), welche ein Profil des Kunden (C) mit den besagten Routing-Regeln (1) speichert, zurückgewonnen werden, verknüpft werden, wobei das Profil des Kunden bei der Registrierung des Kunden durch die Verknüpfung der Routing-Regeln (1) mit den zusätzlichen Routing-Regeln (2), welche geeignet sind, gemeinsam ausgehend von dem besagten Profil des Kunden verarbeitet zu werden, angepasst wird, wobei die verknüpften Routing-Regeln (3) zu einem späteren Zeitpunkt von dem IMS-Netzwerk für das Routen der Verbindungen des Kunden je nach dessen Bedarf verwendet werden können, wobei das Verwenden der verknüpften Routing-Regeln (3) zu einem späteren Zeitpunkt das Aktivieren mindestens einer zusätzlichen Routing-Regel (2), das Deaktivieren mindestens einer zusätzlichen Routing-Regel (2) und/oder das Modifizieren mindestens einer zusätzlichen Routing-Regel (2) durch den Kunden umfasst.

2. Anpassungsverfahren nach Anspruch 1, wobei die Verknüpfung der Routing-Regeln (1, 2) auf Ebene der Funktion S-CSCF des IMS-Netzwerks erfolgt.

3. Anpassungsverfahren nach Anspruch 1 oder 2, wobei die zusätzlichen Routing-Regeln (2) in die SIP-Registrierungsnachricht des Kunden (C) eingefügt werden.

4. Anpassungsverfahren nach einem beliebigen der Ansprüche 1 bis 3, wobei die zusätzlichen Routing-Regeln (2) im Format XML übertragen werden.

5. Netzwerk vom Typ IMS mit einer Funktion S-CSCF, welche, wenn ein Kunde (C) mit dem besagten Netzwerk verbunden wird, mit einer Informationsspeichervorrichtung (HSS) kommuniziert, um die vom Betreiber für den besagten Kunden definierten Routing-Regeln (1) zurückzugewinnen, wobei das besagte Netzwerk ebenfalls Mittel umfasst, weiche es dem Kunden ermöglichen, bei dessen Registrierung im IMS-Netzwerk zusätzliche Routing-Regeln (2) zu übertragen, wobei die besagte Funktion S-CSCF Mittel umfasst, die dazu ausgelegt sind, die besagten zusätzlichen Routing-Regeln mit den Routing-Regeln (1), die vom Betreiber definiert und aus einer Informationsspeichervorrichtung (HSS), weiche ein Profil des Kunden (C) mit den besagten Routing-Regeln (1) Speichert, zurückgewonnen werden, zu verknüpften, wobei das Profil des Kunden bei der Registrierung des Kunden durch die Verknüpfung der Routing-Regeln (1) mit den zusätzlichen Routing-Regeln (2), die geeignet sind, ausgehend von dem besagten Profil des Kunden gemeinsam verarbeitet zu werden, angepasst wird, wobei das Netzwerk weiterhin Mittel umfasst, weicht es dem Kunden (C) ermöglichen, mindestens eine zusätzliche Routing-Regel (2) zu aktivieren, zu deaktivieren und/oder zu modifizieren.
